# EUROPÄISCHE PATENTANMELDUNG

(11) **EP 4 464 980 A1**
(43) Veröffentlichungstag der Anmeldung: **20.11.2024**
(21) Anmeldenummer: 24174104.0
(22) Anmeldetag: 03.05.2024
(51) Int. Cl.: G01B 11/25

(54) **VERFAHREN UND MESSVORRICHTUNG ZUM ÜBERPRÜFEN EINER PROFILGEOMETRIE EINES PANEELS**

(30) Priorität: 15.05.2023 DE 102023112793
(71) Anmelder: Prewi Mess- und Steuerungstechnik GmbH, 32052 Herford (DE)
(72) Erfinder: PREKWINKEL, Axel, 32049 Herford (DE)
(74) Vertreter: Kleine, Hubertus

(57) **Zusammenfassung**

Die Erfindung betrifft ein Verfahren zum Überprüfen einer Profilgeometrie eines Paneels (20) mithilfe einer Messvorrichtung (10), die mindestens einen Laserscanner (11a-c) aufweist, mit den folgenden Schritten:
- Auflegen des Paneels (20) mit einer Seite auf eine der Messvorrichtung (10) zugeordneten Auflagefläche (2) und Anlegen des Paneels (20) mit einer Schmalseite an eine Anlagekante (3);
- Erstellen eines Abbilds (21) des Profils des Paneels (20) im Bereich der Schmalseite und einem daran angrenzenden Abschnitt einer Deckschicht (22) des Paneels (20) mithilfe des mindestens einen Laserscanners (11a-c);
- Ermitteln einer ersten Geraden (31), die den Verlauf der Deckschicht (22) in dem Abbild (21) wiedergibt;
- Ermitteln einer zweiten Geraden (32), die parallel in einem vorgegebenen Abstand (d) zu der ersten Geraden (31) verläuft und das Abbild (21) in einem ersten Punkt (33) schneidet;
- Ermitteln einer dritten Geraden (34), die durch den ersten Punkt (33) geht und in einem vorgegebenen Winkel auf der ersten Geraden (31) steht und diese in einem zweiten Punkt (35) schneidet;
- Bestimmen mindestens eines Abstands (Δd) eines Referenzpunkts (36), der in einem Koordinatensystem vorgegeben ist, dessen Achsen durch die erste Gerade (31) und die dritte Gerade (33) und dessen Ursprung durch den zweiten Punkt (35) definiert ist, und dem Abbild (21); und
- Ermitteln eines Wertes der Maßhaltigkeit der Profilgeometrie des Paneels (20) anhand des mindestens eines Abstands (Δd).

Die Erfindung betrifft weiterhin eine Messvorrichtung (10) zur Durchführung des Verfahrens.

## Beschreibung

Die Erfindung betrifft ein Verfahren zum Überprüfen einer Profilgeometrie eines Paneels und eine Messvorrichtung zur Durchführung des Verfahrens, die mindestens einen Laserscanner aufweist, wobei ein Lichtfächer des mindestens einen Laserscanners auf eine profilierte Kante des Paneels gerichtet ist.

Paneele werden als Fußbodenbelag oder auch als Wandverkleidung eingesetzt. Weit verbreitet sind beispielsweise Vollholz- oder Laminatpaneele, die an ihren Schmalseiten eine aufwendige Profilierung aufweisen, durch die aneinandergefügte Paneele dauerhaft lückenlos miteinander verbunden werden können.

Um diese Verbindung untereinander bei gleichzeitig leichter Verlegbarkeit zu gewährleisten, muss bei Herstellung der Paneele die Maßhaltigkeit der Profilgeometrie gewährleistet sein. Dazu ist es bekannt, eine tatsächliche Profilgeometrie optisch mithilfe von Laserscannern zu vermessen und mit einer vorgegebenen Profilgeometrie zu vergleichen. Die verwendeten Laserscanner sind i. d. R. Laserscanner, die auf die profilierte Schmalseite gerichtet werden und deren Geometrie erfasst. Zum Abgleich der erfassten Geometrie mit der vorgegebenen Geometrie werden ein Abbild der gemessenen Profilgeometrie (i.d.R. in Form einer Messpunktwolke) und ein Abbild der vorgegebenen Geometrie (i.d.R. in Form eines Linienzugs) übereinandergelegt und gegeneinander solange verschoben, bis eine möglichst geringe Abweichung erzielt ist. Dazu wird das ein Abbild gegen über dem anderen verschoben und/oder gedreht. Es können dann beispielsweise die quadratischen Abweichungen der Messpunkte von dem Linienzug aufsummiert werden und die Profile so gegeneinander verschoben/gedreht werden, bis diese Summe minimal wird (*Least Square Method*). Die minimal erzielbare Summe der quadrierten Abweichungen stellt dann ein Maß für die Korrektheit der gemessenen Profilgeometrie gegenüber der vorgegebenen Profilgeometrie dar.

Die zunehmende Komplexität der bei Paneelen verwendeten Profils, die teilweise mit Hinterschnitten ausgeführt ist, um das Ineinandergreifen benachbarter Paneele zu ermöglichen, kann dazu führen, dass die Profilgeometrie im Schmalseitenbereich eines Paneels nicht vollständig erfasst werden kann. Das genannte Verfahren, bei dem die Profile dann gegeneinander verschoben und/oder gedreht werden, führt in diesem Fall zu falschen oder zumindest stark abweichenden Ergebnissen.

Es ist eine Aufgabe der vorliegenden Erfindung, ein Verfahren zum Überprüfen einer Profilgeometrie eines Paneels und eine Messvorrichtung zur Durchführung des Verfahrens zu schaffen, mit der auch komplexe Profilgeometrien zufriedenstellend vermessen werden können und Abweichungen zu vorgegebenen Profilgeometrien zuverlässig ermittelt werden können.

Diese Aufgabe wird durch ein Verfahren und eine Messvorrichtung mit den jeweiligen Merkmalen der unabhängigen Ansprüche gelöst. Vorteilhafte Ausgestaltungen und Weiterbildungen sind jeweils Gegenstand der abhängigen Ansprüche.

Ein erfindungsgemäßes Verfahren der eingangs genannten Art umfasst die folgenden Schritte: Es wird ein Paneel mit einer Seite auf eine der Messvorrichtung zugeordnete Auflagefläche aufgelegt und mit einer Schmalseite an eine Anlagekante angelegt. Dann wird ein Abbild des Profils des Paneels im Bereich der Schmalseite und einem daran angrenzenden Abschnitt einer Deckschicht des Paneels mithilfe des mindestens einen Laserscanners erstellt. Es wird eine erste Gerade ermittelt, die den Verlauf der Deckschicht in dem Abbild wiedergibt. Weiter wird eine zweite Gerade ermittelt, die parallel in einem vorgegebenen Abstand zu der ersten Geraden verläuft und das Abbild in einem ersten Punkt schneidet. Anschließend wird eine dritte Gerade ermittelt, die durch den ersten Punkt geht und in einem vorgegebenen Winkel, bevorzugt senkrecht, auf der ersten Geraden steht und diese in einem zweiten Punkt schneidet. Die erste Gerade und die dritte Gerade bilden ein Koordinatensystem, dessen Ursprung durch den Schnittpunkt angegeben ist. Die geforderte Profilgeometrie ist in einem derartigen Koordinatensystem in der Form von Referenzpunkten vorgegeben. Es wird mindestens ein Abstand mindestens eines solchen Referenzpunkts zu dem Abbild bestimmt und ein Wert für die Maßhaltigkeit der Profilgeometrie des Paneels anhand des mindestens eines Abstands ermittelt.

Der Übergang von der Deckschicht, die im verlegten Zustand des Paneels dessen Oberfläche bildet, zu der profilierten Schmalkanten kann auf diese Weise sehr zuverlässig bestimmt werden. Dieses gilt insbesondere, wenn das Abbild in Form eines Oberflächenverlaufs vorliegt, also in der Form, in der eine Ausgabe von Laserscannern üblicherweise erfolgt.

Um mit dem beschriebenen Verfahren das als Referenzsystem genutzte Koordinatensystem zu konstruieren, wird nur die Lage der Deckschicht und der Fräskante am Übergang zum profilierten Abschnitt an der Schmalkante benötigt. Diese Bereiche sind in der Regel im Abbild nicht von anderen Profilabschnitten verdeckt, weswegen die Konstruktion des Koordinatensystems zuverlässig vorgenommen werden kann. Verdeckte und nicht wiedergegebene Profilabschnitte können ggf. nicht vermessen werden, führen aber nicht zu einer fehlerhaften Verschiebung der im Abbild sichtbaren Bereiche.

Vorteilhaft wird eine Mehrzahl von Referenzpunkten vorgegeben und es wird eine Mehrzahl von Abständen bestimmt. Es ist denkbar, die gemessenen Abstände zu einer einzigen Bewertungszahl zusammenzufassen, beispielsweise indem die Absolutwerte der Abstände oder die Quadrate der Abstände aufsummiert werden.

Es hat sich dabei als vorteilhaft erwiesen, mit einem vorgegebenen Abstand für die parallele zweite Gerade im Bereich von etwa 0,5 bis 3 Millimetern (mm) zu arbeiten.

Falls größere Abschnitte des Profils nicht abgebildet sind, kann in einer Weiterbildung des Verfahrens das Paneel mit einer gegenüberliegenden Seite auf die der Messvorrichtung zugeordneten Auflagefläche aufgelegt werden und mit der gleichen Schmalseite wie zuvor an die Anlagekante angelegt werden. Mit dieser Positionierung des Paneels kann dann ein weiteres Abbild aufgezeichnet und ausgewertet werden und ein weiteres Koordinatensystem generiert werden. Unter Nutzung beider Koordinatensysteme können dann die Abbilder übereinandergelegt werden und der Vergleich mit den Referenzpunkten kann anhand des kombinierten Abbilds vorgenommen werden. Hier wird also der Vorteil, dass ein zuverlässiges Referenzsystem erstellt werden kann, zur Überlagerung der beiden aus unterschiedlichen Richtungen aufgezeichneten Abbilder ausgenutzt. Die Abbilder ergänzen sich dann zu einem einzigen, vollständigeren Abbild.

Eine erfindungsgemäße Messvorrichtung weist mindestens einen Laserscanner und eine zugeordnete Auflagefläche für ein Paneel auf, sowie eine Anlagekante für eine Schmalseite des Paneels. Es ist eine Auswertevorrichtung vorhanden, die zur Durchführung eines derartigen Verfahrens eingerichtet ist. Es ergeben sich die im Zusammenhang mit dem Verfahren genannten Vorteile.

Bevorzugt ist der mindestens eine Laserscanner ein Linienscanner, wobei ein Lichtfächer des mindestens einen Laserscanners in einer Messebene liegt, die senkrecht zu einer Längskante des Paneels ausgerichtet ist. Um das Paneel möglichst vollständig abbilden zu können, weist die Messvorrichtung mindestens zwei als Linienscanner ausgebildete Laserscanner auf, deren Lichtfächer jeweils in der Messebene liegen und die in unterschiedlichem Winkel ausgerichtet sind. Besonders vorteilhaft sind die mindestens zwei Laserscanner innerhalb der Messebene unsymmetrisch um die Auflagefläche angeordnet. Bei einem umgedrehten Paneel erfolgt die weitere Messung dann unter anderem Blickwinkel als die zuerst durchgeführte Messung, wodurch ein aus beiden Messungen zusammengesetztes Abbild vervollständigt wird.

Die Erfindung wird nachfolgend anhand von Ausführungsbeispielen mithilfe von Figuren näher erläutert. Die Figuren zeigen:
- Fig. 1: eine räumliche Darstellung einer Messvorrichtung zur Vermessung einer Profilgeometrie;
- Fig. 2: die Messvorrichtung der Fig. 1 in einer Querschnittsdarstellung;
- Fig. 3: eine Detailvergrößerung eines Ausschnitts aus der Fig. 2;
- Fig. 4: ein Flussdiagramm eines anmeldungsgemäßen Verfahrens;
- Fig. 5a-e: jeweils eine schematische Darstellung von Messwerten einer Profilgeometrie und Hilfslinien zur Illustration des Verfahrens der Fig. 4; und
- Fig. 6a-c: jeweils eine schematische Darstellung von Messwerten einer weiteren Profilgeometrie und Hilfslinien zur Illustration des Verfahrens der Fig. 4.

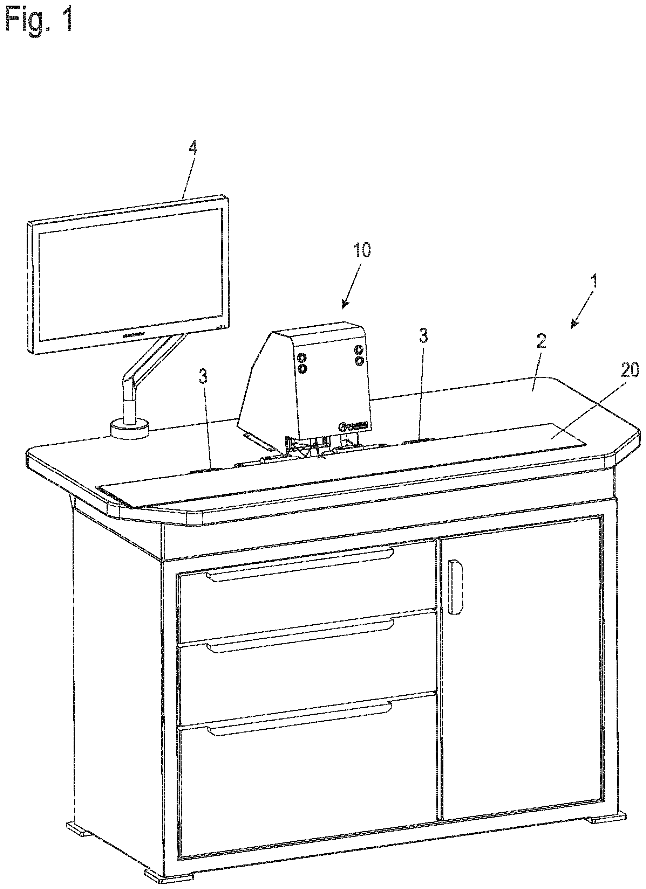

Ein Ausführungsbeispiel einer anmeldungsgemäßen Messvorrichtung 10 ist in Figur 1 in einer räumlichen Gesamtansicht dargestellt. Die Messevorrichtung 10 ist Teil einer Messstation 1, die eine Auflagefläche 2 Anlagekanten 3 zur Auf- bzw. Anlage eines Paneels 20 umfasst. Es ist jeweils eine Anlagekante 3 auf jeder Seite der Messvorrichtung 10 angeordnet.

Die dargestellte Messstation 1 ist in Form eines Werktisches aufgebaut, der vorteilhaft beispielsweise auch einen Computer aufnehmen kann. Der Computer dient der zur Steuerung der Messvorrichtung 10 und stellt eine Auswertevorrichtung für aufgenommene Messergebnisse dar. Von einem solchen Computer ist in der Figur 1 nur ein Bildschirm 4 sichtbar.

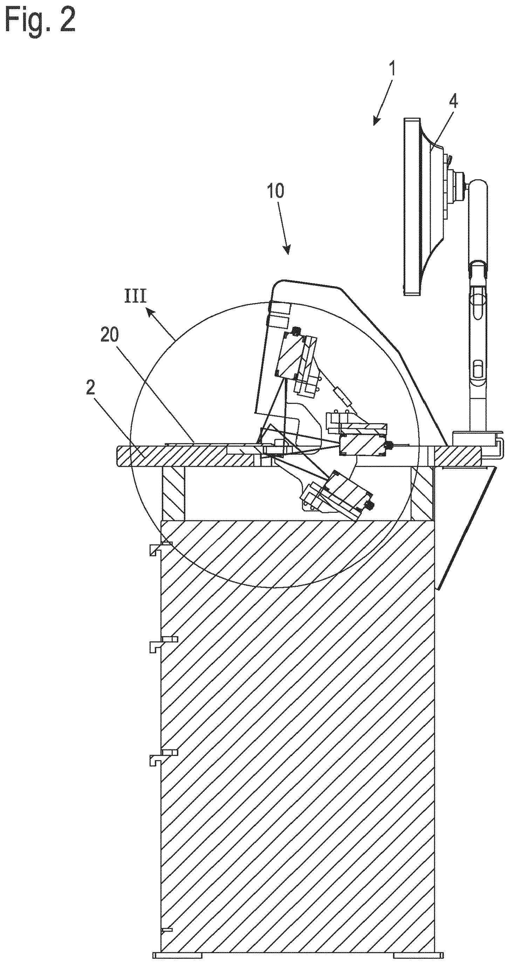

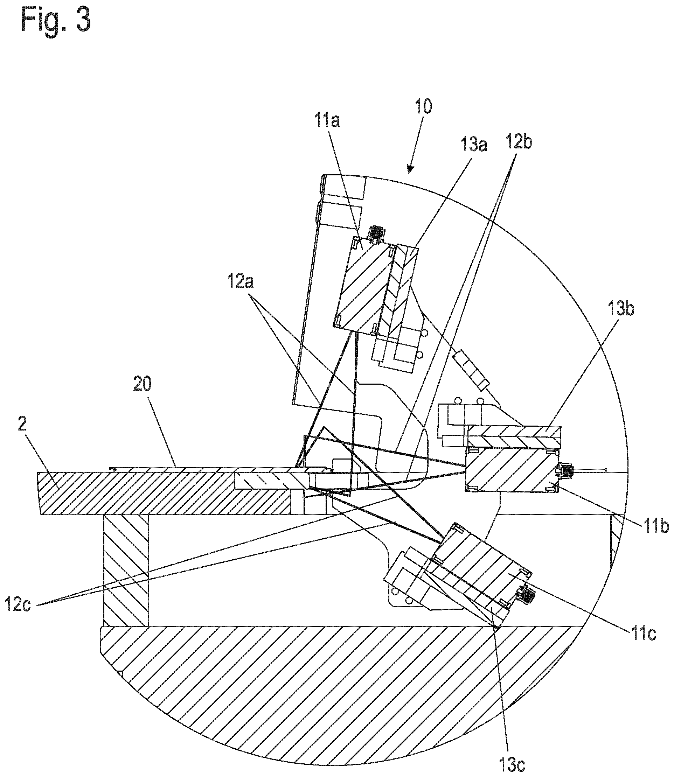

Die Figur 2 zeigt die Messstation 1 in einem Querschnitt. Ein Ausschnitt der Auflagefläche 2 mit Anlagekanten 3 und der Messvorrichtung 10 ist in einer Vergrößerung in Figur 3 wiedergegeben.

Das auf die Auflagefläche 2 aufgelegte Paneel 20 ist mit einer Schmalseite gegen die Anlagekante 3 geschoben. Im Bereich der Messvorrichtung 10 selbst, der in der Figur 3 in der Schnittdarstellung wiedergegeben ist, ist die Auflagefläche 2 ausgespart, so dass die an der Anlagekante 3 anliegende Schmalseite und auch ein Abschnitt der auf die Auflagefläche 2 aufliegenden Seite des Paneels 20 zugänglich sind.

Die Messvorrichtung 10 weist im dargestellten Beispiel drei Laserscanner 11a-c auf, die alle in einer Ebene, der Messebene angeordnet sind, wobei diese Messebenen senkrecht zur Auflagefläche 2 und auch senkrecht zu der Verbindungslinie der Anlagekante 3 ausgerichtet ist. Bezogen auf das aufgelegte Paneele 20 steht die Messebene entsprechend senkrecht zur Längsrichtung des Panels 20 und damit auch senkrecht zu der Oberfläche des Panels 20.

Die Laserscanner 11a-c sind Linienscanner, die in einem bestimmten Offnungswinkelbereich entlang einer Scanlinie einen Abstand zu einem Körper, hier dem Paneel 20, bestimmen können. Der Typ der Laserscanner 11a-c wird auch als 2-D Scanner bezeichnet, da er das Tiefenprofil entlang einer Linie ermitteln kann. Sie können auf einem TOF (Time Of Flight) - Messverfahren beruhen oder eine Triangulationsmethode nutzen.

Während des Scanvorgangs bilden die Laserstrahlen jeweils einen Lichtfächer 12a-c mit dem genannten Öffnungswinkel. Die Laserscanner 11a-c sind auf jeweils einer einstellbaren Montagekonsole 13a-c so montiert und justiert, dass ihre Lichtfächer 12a-c in der gemeinsamen Messebene liegen.

Die Laserscanner 11a-c sind aus unterschiedlichen Richtungen auf das Paneel 20 ausgerichtet sind: Der Laserscanner 11b ist in Richtung der Schmalseite des Panels 20, das an der Anlagekante 3 anliegt, ausgerichtet. Dieser Winkel ist dann etwa 0° gemessen an der Ausrichtung der Auflagefläche 2. Der Laserscanner 11a hat eine Blickrichtung von schräg oben auf das Paneele 20, in einem Winkel von etwa 70°-80° zur Auflagefläche 2. Der Laserscanner 11c hat einen Blickwinkel von schräg unten auf die Unterseite sowie die Schmalseite des Panels 20. Sein Winkel beträgt in etwa - 20° bis -30° zur Auflagefläche 2.

Die Anzahl von vorliegend drei Laserscanner 11a-c ist beispielhaft. Das anmeldungsgemäße Verfahren kann auch mit weniger oder mehr Laserscannern durchgeführt werden. Da jeder einzelne der Laserscanner 11a-c von einem Punkt aus misst, können je nach Geometrie des zu vermessenden Profils bestimmte Bereiche des Profils aus dem Blickwinkel des jeweiligen Laserscanners 11a-c von anderen Abschnitten des Profils verschattet sein. Daher ist es sinnvoll, mindestens zwei Laserscanner einzusetzen, um das Profil des Panels 20 im Bereich seiner Schmalseite möglichst vollständig erfassen zu können.

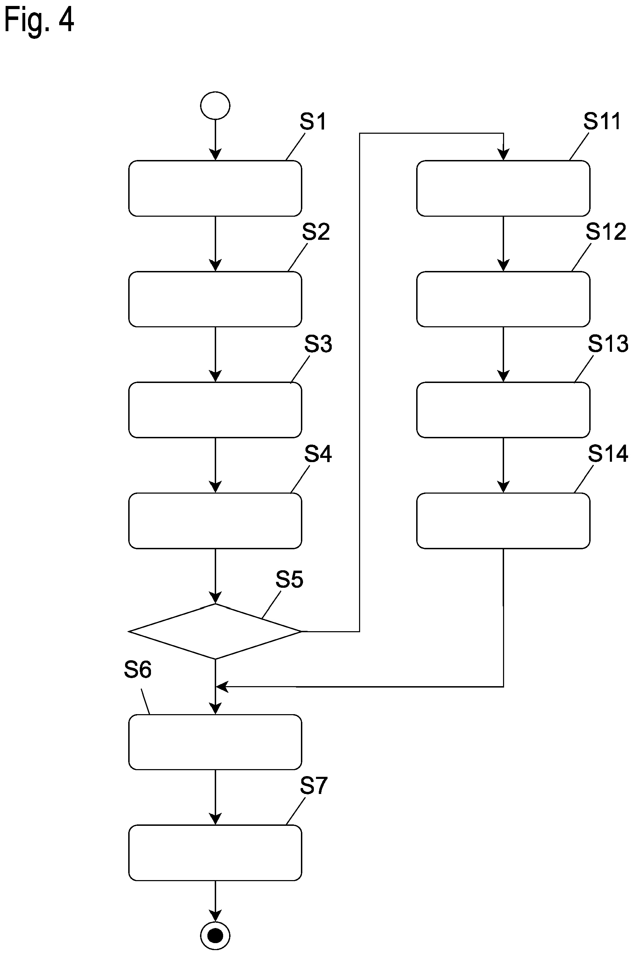

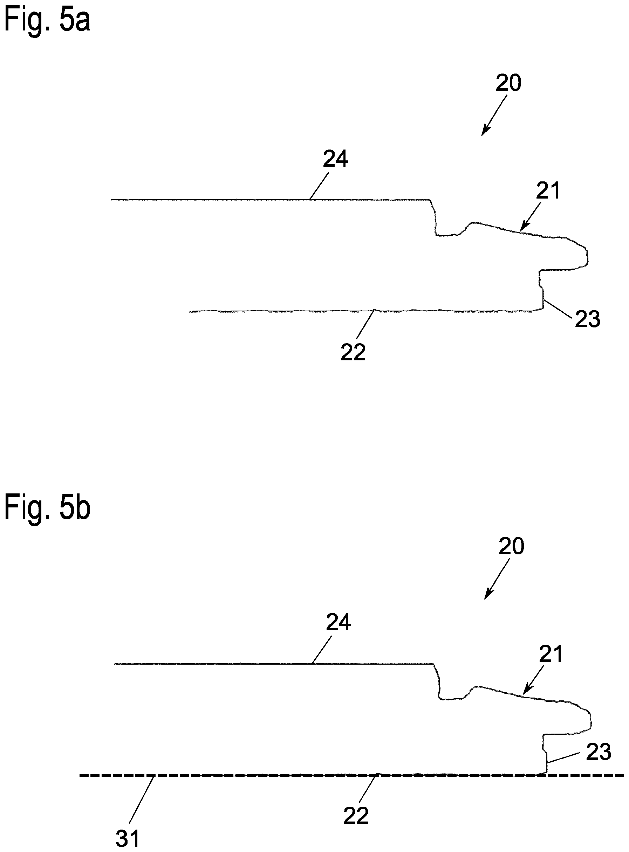

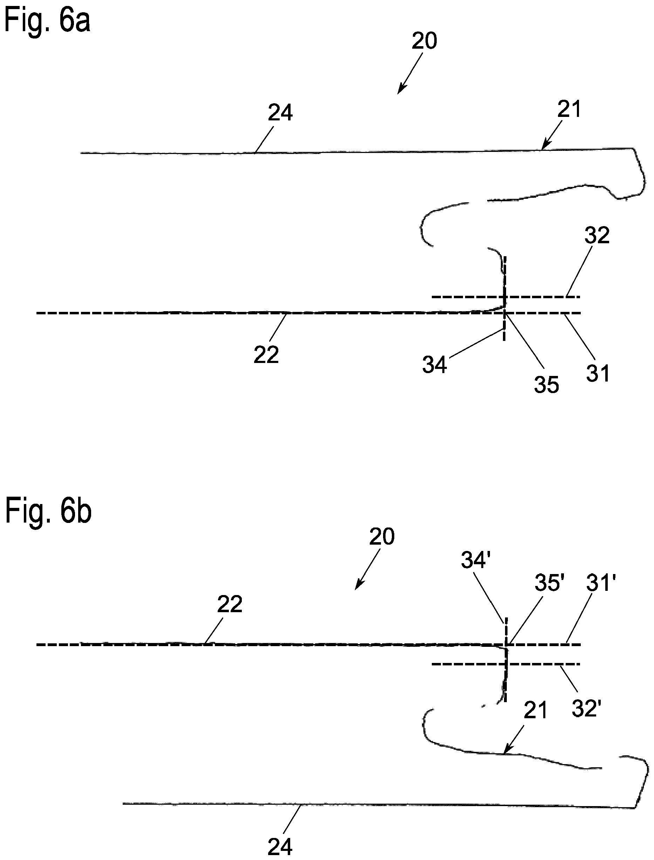

Nachfolgend wird ein Ausführungsbeispiel eines erfindungsgemäßen Verfahrens mithilfe eines Flussdiagramms anhand von Figur 4 näher erläutert. Dabei wird Bezug genommen auf Messbeispiele an zwei unterschiedlichen Paneelen 20, die in den Figuren 5a-e und 6a-c wiedergegeben sind. Zudem wird das Verfahren mit Bezug auf die Messstation 1 gemäß den Figuren 1-3 und entsprechend unter Berücksichtigung der dort verwendeten Bezugszeichen erläutert.

In einem ersten Schritt S1 wird ein zu vermessendes Paneel, beispielsweise das Paneele 20 gemäß den Figuren 1-3, auf die Auflagefläche 2 gelegt und mit einer profilierten Schmalseite, deren Profil vermessen werden soll, an die Anlagekante 3 geschoben.

In einem zweiten Schritt S2 werden Linienscans durch die Laserscanner 11a-c aufgenommen und zusammengesetzt.

Es entsteht ein Abbild 21 des Profils, wie es beispielhaft in der Figur 5a wiedergegeben ist. Das dargestellte Panel 20 ist ein typisches Laminatpaneel, das eine Deckschicht 22 aufweist, die später beim verlegten Fußboden die Oberseite des Panels 20 darstellt und daher nachfolgend auch aus Oberseite 22 bezeichnet wird.

Zur Schmalseite hin ist eine Frontkante 23 gebildet, die sich über etwa ein Drittel der Dicke des Panels 20 erstreckt. Daran schließt sich eine komplexere Geometrie an, die an die Schmalseite angefräst wurde und auf deren Vermessung das Hauptaugenmerk des anmeldungsgemäßen Messverfahrens ist. Dieses Schmalseitenprofil 23 endet an einer Unterseite 24 des Paneels, die parallel zur Oberseite 22 verläuft und auf der das Paneele 20 im verlegten Zustand aufliegt. Sie wird auch als Auflageseite 24 bezeichnet.

In einem nächsten Schritt S3 des Verfahrens wird eine erste Gerade 31 an die Messpunkte des Abbilds 21 angepasst ("gefittet"), die der Deckschicht 22 zugeordnet werden können. Die Auswahl der dafür benutzten Messpunkte kann mithilfe eines vordefinierten Suchfensters erfolgen. Die erste Gerade 31, die nachfolgend auch Deckschichtlinie 31 genannt wird, ist in der Figur 5b dargestellt. Aufgrund der großen Zahl an Messpunkten entlang der Deckschicht 22 des Panels 20 ist diese Deckschichtlinie 31 gut bestimmt.

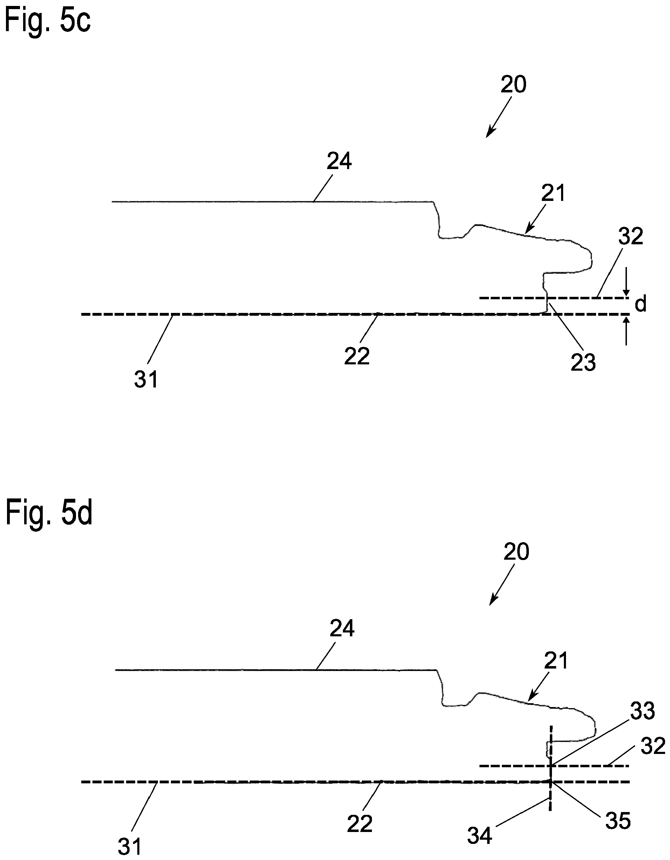

In einem nächsten Schritt S4 wird parallel zu der Deckschichtlinie 31 eine gerade 32, nachfolgend auch Schnittlinie 32 genannt, definiert, die in Richtung des Panels 20 in einem vorgegebenen Abstand d zur Deckschichtlinie 32 verläuft. Dieses ist in Figur 5c dargestellt. Der Abstand d kann absolut vorgegeben sein und z.B. im Bereich von etwa 0,5 Millimetern (mm) bis etwa 3 mm liegen. Der Abstand d kann auch relativ zur Dicke des Paneels 20 vorgegeben sein und z.B. etwa 10% bis etwa 30 % der Dicke des Paneels 20 betragen.

Es wird ein dann ein erster Punkt 33 als Schnittpunkt zwischen der Schnittlinie 32 und dem Abbild 21 im Bereich der Frontkante ermittelt und eine dritte Gerade 34 ermittelt, die in einem vorgegebenen Winkel, bevorzugt lotrecht, die Deckschichtlinie 32 in einem zweiten Punkt 35 schneidet, wie das in Figur 5d gezeigt ist. Die dritte Gerade 34 wird nachfolgend auch Kantenlinie 34 genannt. Der zweite Punkt 35 wird auch Fügepunkt 35 genannt und stellt einen Referenzpunkt für alle weiteren Messungen dar. Die Deckschichtlinie 32 bildet zusammen mit der Kantenlinie 34 ein zweidimensionales, ggf. orthogonales Koordinatensystem mit dem Fügepunkt 35 als Ursprungs- oder Nullpunkt. Dieses Koordinatensystem stellt ein Referenzkoordinatensystem für das Profil und damit das Paneel 20 dar.

In einem folgenden Schritt S5 wird bewertet, inwieweit das Abbild 21 vollständig ist oder Lücken aufweist. Lücken können von Verschattung durch andere Abschnitte des Profils hervorgerufen sein. In dem Beispiel der Figuren 5a-e ist das Abbild 21 des Profils vollständig und das Verfahren wird unmittelbar in einem Schritt S6 fortgesetzt. Wenn das Abbild 21 nicht vollständig ist, werden vor dem Schritt S6 zusätzliche Schritte S11-S14 ausgeführt, die weiter unten im Zusammenhang mit dem zweiten, in den Fig. 6a-c wiedergegebenen Beispiel vorgestellt werden.

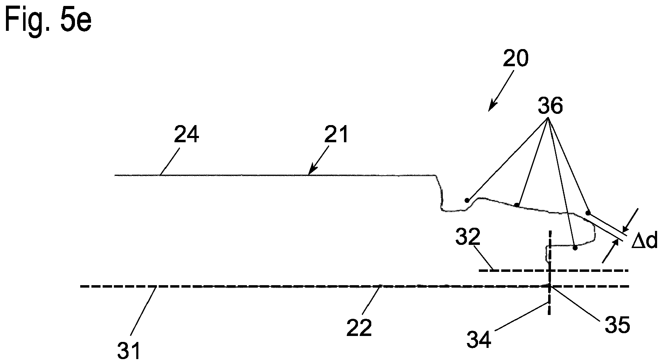

Um die Maßhaltigkeit des Profils des vermessenen Panels 20 zu bewerten, wird ein vorgegebenes Profil mit definierten Referenzpunkten 36 genutzt. Die Referenzpunkte 36 sind relativ zu dem Fügepunkt 35 in dem Referenzkoordinatensystem angegeben. Eine Anzahl von beispielhaft vier Referenzpunkten 36 ist in der Figur 5e dargestellt.

In dem Schritt S6 wird je eine Lotlinie von jedem der Referenzpunkte 36 auf das Abbild 21 des Profils gefällt und ein Abstand Δd des Referenzpunkts 36 von dem Abbild 21, also von der Konturlinie des gemessenen Profils ermittelt. Beispielhaft ist das für einen der Referenzpunkte 36 in der Figur 5e dargestellt. Die Abstände Δd bilden ein Maß für die Maßhaltigkeit des Profils des Panels 20. Es ist denkbar, die gemessenen Abstände Δd zu einer einzigen Bewertungszahl zusammenzufassen, beispielsweise indem die Absolutwerte der Abstände Δd oder die Quadrate der Abstände Δd aufsummiert werden. Auch andere Bewertungsverfahren mit anderen Gewichtungen sind möglich.

Ein Vorteil der Verwendung der diskreten Referenzpunkte 36 ist, dass die Referenzpunkte 36 an besonders kritischen Bereichen des Profils gesetzt werden können und an solchen, in denen eine Maßhaltigkeit weniger relevant ist, nicht gesetzt werden brauchen bzw. nur in geringerer Dichte gesetzt werden, um Abweichungen dort weniger stark zu berücksichtigen.

In der Figur 6a ist analog zu der Figur 5d eine Messung an einem zweiten Paneel mit einem anderen Profil nach Durchführung der Schritte S1 bis S4 gezeigt. Im Unterschied zu der Figur 5c ist das Abbild 21 jedoch in diesem Fall aufgrund von Verschattungen lückenhaft, was die nachfolgende Auswertung behindert bzw. ihre Aussagekraft mindern würde. Das Verfahren wird daher nach dem Feststellen der Unvollständigkeit in dem Schritt S5 mit dem Schritt S11 fortgeführt.

In diesem Schritt S11 wird das Paneel um eine Achse gedreht, die horizontal in der Messebene verläuft. Mit anderen Worten wird also das Paneel 20 jetzt auf der Unterseite 24 liegend auf die Auflagefläche 2 aufgelegt, wobei nach wie vor dieselbe Schmalseite an den Anlagenkanten 3 anliegt.

Mit dieser Ausrichtung wird das Profil des Paneels 20 in einem folgenden Schritt S12 analog zu dem Schritt S2 erneut mithilfe der Laserscanner 11a-c vermessen und ein weiteres Abbild 21' erzeugt. Zur Unterscheidung zu den entsprechenden Elementen aus den Schritten S1 bis S4 werden jetzt Bezugszeichen mit einem Apostroph (') benutzt.

Ebenfalls analog zu dem Schritt S3 wird in einem folgenden Schritt S13 eine weitere Deckschichtlinie 31' angepasst und eine weitere Schnittlinie 32' definiert, die in Richtung des Panels 20 in einem vorgegebenen Abstand d zur weiteren Deckschichtlinie 31' verläuft - bei dieser Ausrichtung des Paneels 20 also jetzt unterhalb der weiteren Deckschichtlinie 31'.

Analog zum Schritt S4 wird in einem nächsten Schritt S14 wiederum ein weiterer Schnittpunkt 33' zwischen der weiteren Schnittlinie 32' und dem weiteren Abbild 21' im Bereich der Frontkante 23 ermittelt und lotrecht eine weitere Kantenlinie 34' gefällt, wie in Figur 6b wiedergegeben ist. Es entsteht so ein Referenzkoordinatensystem für dieses weitere Abbild 21'.

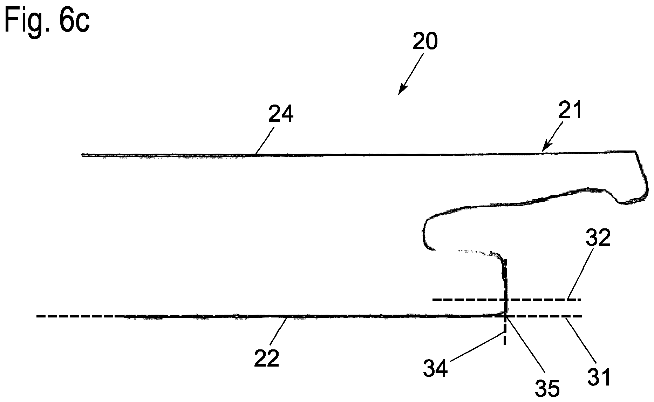

In einem Folgeschritt S15 wird das Abbild 21' an der weiteren Dreckschichtlinie 31' gespiegelt und dem Abbild 21 überlagert, derart, dass die beiden Referenz-Koordinatensysteme übereinander liegen. Das Ergebnis ist in der Figur 6c zu sehen. Beide Abbilder 21, 21' weisen Lücken auf, die jedoch in unterschiedlichen Abschnitten des Profils des Paneels 20 liegen und sich durch die Überlagerung der Abbilder 21, 21' zumindest teilweise ergänzen.

Mit dem so vervollständigten Abbild 21, 21' wird dann das Verfahren wie zuvor beschrieben in den Schritten S6 und S7 fortgeführt. Durch diese Variante des Verfahrens wird eine vollständigere Erfassung des Profils möglich, ohne dass eine größere Anzahl an Laserscannern 11a-c bei der Messvorrichtung 10 benötigt wird. Voraussetzung dafür ist es, dass die vorhandenen Laserscanner 11a-c nicht symmetrisch um den Winkel 0° (gegeben durch die Richtung der Auflagefläche 2) angeordnet sind, und insbesondere der obere der Laserscanner, der Laserscanner 11a in dem Beispiel der Figuren 1-3, einen anderen Blickwinkel hat als der untere der Laserscanner, Laserscanner 11c in dem Beispiel der Figuren 1-3) und/oder dass der mittlere der Laserscanner, Laserscanner 11b in dem Beispiel der Figuren 1-3) einen Blickwinkel ungleich 0° hat.

**Bezugszeichen**
- 1: Messstation
- 2: Auflagefläche
- 3: Anlagekante
- 4: Bildschirm

- 10: Messvorrichtung
- 11a-c: Laserscanner
- 12a-c: Lichtfächer
- 13a-c: Montagesockel

- 20: Paneel
- 21: Abbild
- 22: Deckschicht (Oberseite)
- 23: Frontkante
- 24: Auflageseite (Unterseite)

- 31: erste Gerade (Deckschichtlinie)
- 31': weitere erste Gerade (weitere Deckschichtlinie)
- 32: zweite Gerade (Schnittlinie)
- 32': weitere zweite Gerade (weitere Schnittlinie)
- 33: erster Punkt (Schnittpunkt)
- 33': weiterer erster Punkt (weiterer Schnittpunkt)
- 34: dritte Gerade (Kantenlinie)
- 34': weitere dritte Gerade (weitere Kantenlinie)

- 35: zweiter Punkt (Ursprungspunkt)
- 36: Referenzpunkt

- d: Abstand Deckschichtlinie-Schnittlinie
- Δd: Abstand Referenzpunkt-Abbild

## Patentansprüche

1. Verfahren zum Überprüfen einer Profilgeometrie eines Paneels (20) mithilfe einer Messvorrichtung (10), die mindestens einen Laserscanner (11a-c) aufweist, mit den folgenden Schritten:
- Auflegen des Paneels (20) mit einer Seite auf eine der Messvorrichtung (10) zugeordneten Auflagefläche (2) und Anlegen des Paneels (20) mit einer Schmalseite an eine Anlagekante (3);
- Erstellen eines Abbilds (21) des Profils des Paneels (20) im Bereich der Schmalseite und einem daran angrenzenden Abschnitt einer Deckschicht (22) des Paneels (20) mithilfe des mindestens einen Laserscanners (11a-c);
- Ermitteln einer ersten Geraden (31), die den Verlauf der Deckschicht (22) in dem Abbild (21) wiedergibt;
- Ermitteln einer zweiten Geraden (32), die parallel in einem vorgegebenen Abstand (d) zu der ersten Geraden (31) verläuft und das Abbild (21) in einem ersten Punkt (33) schneidet;
- Ermitteln einer dritten Geraden (34), die durch den ersten Punkt (33) geht und in einem vorgegebenen Winkel auf der ersten Geraden (31) steht und diese in einem zweiten Punkt (35) schneidet;
- Bestimmen mindestens eines Abstands (Δd) eines Referenzpunkts (36), der in einem Koordinatensystem vorgegeben ist, dessen Achsen durch die erste Gerade (31) und die dritte Gerade (33) und dessen Ursprung durch den zweiten Punkt (35) definiert ist, und dem Abbild (21); und
- Ermitteln eines Wertes der Maßhaltigkeit der Profilgeometrie des Paneels (20) anhand des mindestens eines Abstands (Δd).

2. Verfahren nach Anspruch 1, bei dem der vorgegebene Winkel 90° beträgt.

3. Verfahren nach Anspruch 1 oder 2, bei dem der vorgegebene Abstand (d) im Bereich von etwa 0,5 bis 3 mm liegt.

4. Verfahren nach einem der Ansprüche 1 bis 3, bei dem eine Mehrzahl von Referenzpunkten (36) vorgegeben ist und eine Mehrzahl von Abständen (Δd) bestimmt wird, wobei der Wert der Maßhaltigkeit der Profilgeometrie des Paneels (20) anhand einer Summe der Abstände (Δd) oder einer Summe von Quadraten der Abstände (Δd) ermittelt wird.

5. Verfahren nach einem der Ansprüche 1 bis 4, bei dem vor dem Schritt des Bestimmens des mindestens eines Abstands (Δd) die folgenden zusätzlichen Schritte ausgeführt werden:
- Drehen des Paneels (20) und Auflegen des Paneels (20) mit einer gegenüberliegenden Seite auf die der Messvorrichtung (10) zugeordneten Auflagefläche (2) und Anlegen des Paneels (20) mit der Schmalseite an die Anlagekante (3);
- Erstellen eines weiteren Abbilds (21') des Profils des Paneels (20) im Bereich der Schmalseite und einem daran angrenzenden Abschnitt einer Deckschicht (22) des Paneels (20) mithilfe des mindestens einen Laserscanners (11a-c);
- Ermitteln einer weiteren ersten Geraden (31'), die den Verlauf der Deckschicht (22) in dem weiteren Abbild (21') wiedergibt;
- Ermitteln einer weiteren zweiten Geraden (32`), die parallel in dem vorgegebenen Abstand (d) zu der weiteren ersten Geraden (31') verläuft und das weitere Abbild (21') in einem weiteren ersten Punkt (33') schneidet;
- Ermitteln einer weiteren dritten Geraden (34'), die durch den weiteren ersten Punkt (33') geht und in dem vorgegebenen Winkel auf der weiteren ersten Geraden (31') steht und diese in einem weiteren zweiten Punkt (35') schneidet;
- Spiegeln des weiteren Abbilds (21') an der weiteren ersten Geraden (31) und vereinen des gespiegelten weiteren Abbilds (21') mit dem Abbild (21), wobei zur Positionierung der Abbilder (21, 21') zueinander die weitere erste Gerade (31') deckungsgleich auf der ersten Gerade (31') und die weitere dritte Gerade (33') deckungsgleich auf die dritte Gerade (31) gelegt wird.

6. Messvorrichtung (10) mit mindestens einem Laserscanner (11a-c) und einer zugeordneten Auflagefläche (2) für ein Paneel (20) sowie einer Anlagekante (3) für eine Schmalseite des Paneels (20), aufweisend eine Auswertevorrichtung, die zur Durchführung eines Verfahrens gemäß einem der Ansprüche 1 bis 5 eingerichtet ist.

7. Messvorrichtung (10) nach Anspruch 6, wobei der mindestens eine Laserscanner (11a-c) ein Linienscanner ist.

8. Messvorrichtung (10) nach Anspruch 7, wobei ein Lichtfächer (12a-c) des mindestens einen Laserscanners (11a-c) in einer Messebene liegt, die senkrecht zu einer Längskante des Paneels (20) ausgerichtet ist.

9. Messvorrichtung (10) nach Anspruch 8, aufweisend mindestens zwei als Linienscanner ausgebildete Laserscanner (11a-c), deren Lichtfächer (12a-c) jeweils in der Messebene liegen und die in unterschiedlichem Winkel ausgerichtet sind.

10. Messvorrichtung (10) nach Anspruch 9, wobei die mindestens zwei Laserscanner (11a-c) innerhalb der Messebene unsymmetrisch um die Auflagefläche (2) angeordnet sind.
